Europäisches Patentamt

**European Patent Office**

**Office européen des brevets**

(11) Publication number: **0 032 605**
**A1**

# EUROPEAN PATENT APPLICATION

(21) Application number: **80300179.1**

(22) Date of filing: **18.01.80**

(51) Int. Cl.³: **C 04 B 19/04, B 32 B 13/00**

(43) Date of publication of application: **29.07.81**
**Bulletin 81/30**

(84) Designated Contracting States: **AT BE CH DE FR IT LU NL SE**

(71) Applicant: **HEIT LIMITED, 123 Gardner Road Portslade, Brighton East Sussex (GB)**

(72) Inventor: **Hacker, Dennis Jon, 31 Clarke Court Walsingham Road, Hove East Sussex (GB)**

(74) Representative: **Bizley, Richard Edward et al, BOULT, WADE & TENNANT 27 Furnival street, London EC4A 1PQ (GB)**

(54) **Pre-mix for forming a self-hardening composition, self-hardening composition and composite comprising the same, laminate and insulating structure made from the composite and ingredient for use in any of the aforesaid.**

(57) A self-hardening composition may be made by mixing an alkaline earth metal halide, preferably calcium or magnesium chloride or mixture thereof, calcium metasilicate, sodium fluorosilicate, an aluminum silicate clay such as kaolin, sodium silicate and water. A pre-mix for use in the formation of such a composition can be made up by omitting the sodium silicate and water or by incorporating dry sodium silicate with the other ingredients.

The self-hardening composition formed in accordance with the invention may be used as a bonding composition which will provide insulation against temperature extremes whilst retaining bond strength and avoiding the emission of toxic fumes when subjected to extreme heat or fires.

Composite materials may be made up by mixing expanded aggregate materials and/or reinforcing fibers with such self-hardening compositions. These composite materials may be employed in the production of laminates by adhering layers thereof to facing sheets or may be employed as such in the formation of insulating structures by pressing or extruding such composite materials to produce a desired shape.

## PRE-MIX FOR FORMING A SELF-HARDENING COMPOSITION, SELF-HARDENING COMPOSITION AND COMPOSITE COMPRISING THE SAME, LAMINATE AND INSULATING STRUCTURE MADE FROM THE COMPOSITE AND INGREDIENT FOR USE IN ANY OF THE AFORESAID

This invention relates to a pre-mix composition which, upon admixture with sodium silicate and water, can produce a self-hardening composition having a number of advantageous features.

Many adhesives and bonding compounds in present use are derived from petro-chemical or organic sources. These materials can emit toxic products or ignite in a fire, often resulting in ignition or degradation of particles bonded therewith to form further toxic products, exposure to which can be fatal in confined spaces.

Other bonding compounds adapted for compositions which will withstand extreme temperatures are kiln dried, fired or otherwise subjected to external heating to achieve satisfactory bonding, e.g., fired bricks, tiles, etc.

Utilising the present invention, a composition for insulating materials may be made by cold mixing various components to make a bonding compound that can be intermixed with particulate fillers such as expanded perlite, fiber glass, mineral fibers or wools or diatomite to form a paste. The paste can be molded, pressed or otherwise formed into structured products using conventional machines. The bonded products formed therefrom insulate against extremes of temperature but lose no bond strength and emit no toxic fumes when subjected to extreme heat or fires.

According to the present invention there is provided a pre-mix for the formation of a self-hardening composition by the addition to said pre-mix of sodium silicate and water comprising an alkaline earth metal halide, calcium metasilicate, sodium fluorosilicate and an aluminum silicate clay (e.g. kaolin). Another pre-mix of the invention may comprise, in addition to previously-mentioned ingredients, dry sodium silicate.

The invention further provides a self-hardening composition comprising an alkaline earth metal halide, calcium metasilicate, sodium fluorosilicate, sodium silicate, an aluminum silicate clay and water.

The alkaline earth metal halide is preferably a chloride (see later).

In a preferred compositional aspect, this invention provides a self-hardening composition consisting of 3-5% by weight of an alkaline earth metal chloride, 0.5-1.5% by weight of calcium metasilicate, 0.5-1.5% by weight of sodium fluorosilicate, 30-40% by weight of sodium silicate, 0.02-0.04% by weight of an aluminum silicate clay, and water.

A further aspect of this invention is a self-hardening composite material comprising 10-35% by weight the ingredients of the foregoing self-hardening composition, admixed with an expanded agreggate material and/or reinforcing fibers.

The present invention is ideally suited to the fire proofing of building or other structures either by providing an integral part of such structures or by providing an insulating coating.

The expression "alkaline earth metal chloride" is used herein and means $MgCl_2$ or $CaCl_2$ or a mixture thereof, preferably a 1 : 1 mixture thereof represented by the formula $CaCl_2.MgCl_2$.

Calcium metasilicate is represented by the formula $CaSiO_3$, whether in the $\alpha$-(pseudowollastonite) or $\beta$-(wollastonite) form.

Sodium fluorosilicate, silicofluoride or hexafluorosilicate is represented by the formula $Na_2SiF_6$.

The term "aluminum silicate clay" as used herein includes non-expanding clays, of which kaolinite, halloysite, illite and attapulgite are exemplary. However, kaolin is preferred.

"Sodium silicate" as used in the specification and claims is generally represented by the formula $Na_2SiO_3$ and is also known as water glass (a concentrated solution) or sodium metasilicate. Sodium silicate includes products expressed as having various ratios of $Na_2O:SiO_2$. Typically, in the practice of this invention, sodium silicate is used in the form of a solution in which the $SiO_2:Na_2O$ molar ratio is 1.65:3.9. A preferred sodium silicate has a specific gravity of 1.387 at 499.3 per litre. Solutions of sodium silicate used in the practice of this invention usually contain about 30-40% of solids, i.e., solutions of above about 34° Baume will be used. Most preferably, the bonding compositions of this invention will contain 35-39% by weight of sodium silicates. Therefore, sodium silicate solutions above about 39° Baume are usually used.

The self-hardening compositions of this invention may be made by combining the solid ingredients, for example, with paddles or mechanically opposed rotating arms. To this pre-mix can be added sodium silicate solution or dry sodium silicate (to produce another type of pre-mix). Mixing is continued until the product has an acceptable viscosity, preferably of the order of 26 centipoise at 68.4°F. If the bonding composition is being used without fillers, the material is fabricated into the desired shape and permitted to set under ambient conditions. The time required for setting is dependent upon ambient temperature and open time required. Rule of thumb is 30 minutes at 60°F ambient at which point the product has the following characteristics:

Conductivity is subject to fillers used and end product needs. As a rough guide 25mm at 18 lb/ft$^3$ will come out at 0.04 - 0.06 W/m deg. C. (or better). Low temperatures ranges down to minus 100°C. (or better) dependent upon known prior specifics.

The bonded product has a hard rigid set and face. Natural colour is pearl white. Crushing strength....(without any other additions apart from perlite and bonding compound),,,,, 40kg/in $^2$.

At the end of 1/3 hours curing is complete, as indicated by surface hardness.

Because the compositions of the invention are self-hardening, it will be understood that the ingredients are mixed just prior to use. If desired, the solid ingredients can be premixed and shipped dry. At the point of use, the solid ingredients can then be combined with sodium silicate solution.

It will be appreciated that the use of the self-harding compositions of the invention per se in forming insulating structures or laminated materials (including facing sheets) is envisaged. However, so-called "composite" materials are highly preferred for such uses. Accordingly, in preferred embodiments, 10-35% by weight of the present bonding (self-hardening) composition is extended with an expanded aggregate material and/or reinforcing fiber material to provide fire-retardant light-weight air-curable composites.

"Expanded aggregate material" as used herein includes, but is not limited to, cellular perlite, vermiculite, cellular glass, expanded slag, cellular diatomite and cellular pumice. However, the foregoing are preferred, most preferably expanded or cellular perlite and cellular diatomite.

The expanded aggregate material used in the practice of this invention usually has a particle size of from 150 microns to 4750 microns depending upon the specifications of structured end product requirement. However, material mesh of 2400 - 4750 microns is generally preferred. The density of the expanded aggregate materials can be from $2\frac{1}{2}$ - $11\frac{1}{2}$ lb/ft$^3$ (40 - 180 kg/m$^3$), although aggregates having densities of $5\frac{1}{2}$ - $11\frac{1}{2}$ lb/ft$^3$ (90 - 180 kg/m$^3$) are preferred. Preferred sieve size of expanded perlite particles is 3000 - 6000 microns, with particle size (expanded) running from 3mm to 7mm.

"Reinforcing fibers" include, but are not limited to, organic fibers and fiber glass. Fiber glass is preferred owing to resistance to combustion. Organic fibers include natural fibers such as cellulose and wood fibers and synthetic fibers, e.g., from $\frac{1}{2}$ to $1\frac{1}{2}$ inches in length.

In the practice of the invention, the filler being bonded may be mixed with the cold self-hardening bonding composition to form a paste which may be shaped by extrusion or pressing at 7-40 psi or higher pressures to the required shape, and predetermined product strength required.

Structured end products with densities of 10 to 39 lb/ft$^3$ may be obtained in this fashion.

Addition of inorganic viscosity increasing agents, e.g., Sodium Silicate in solution at S : G 1.387 4.864 pounds per U.S. gallon. to the basic bonding compound up to a level of up to 10% by weight will extend curing time. The curing time can be decreased by the addition of up to 8% by weight of inorganic filler, e.g., Kaolin, Diatomaceous Earth, Fine Mica, Vermiculte, Talc etc. to the self-hardening composition or composites made therefrom.

The process of mixing of the basic self-hardening bonding compound and curing the products through stacking and shipping of structured end products is therefore carried out without application of external heat for drying or curing.

It will be understood that the composite materials containing the self-hardening composition of this invention can, while the composites are in the form of a paste of the required density, be formed, pressed or molded under varying pressures between sheets to form double or single faced laminates. Either facing sheet of the thus-formed laminate is of metal, cardboard, plastic, fiber glass, paper or any other material which will adhere to the composite material, which will dry and cure at ambient temperature. Preferred laminates are those wherein the filler is fiberglass and the facing sheet is metal or fiber glass.

With respect to the self-hardening composition of this invention, the most preferred embodiment is that wherein the alkaline earth metal chloride is $CaCl_2$ $MgCl_2$, the aluminum silicate clay is kaolin, the amount of sodium silicate is 35-39% by weight and the molar ratio $Na_2O:SiO_2$ is 1 : 1.65-3.9.

Of the composites prepared in accordance with the invention, one which is particularly preferred is that wherein the expanded aggregate material is cellular perlite, vermiculite, cellular glass, expanded slag, cellular diatomite or cellular pumice. Another particularly preferred composite contains both one of the foregoing types

8

of aggregate and a reinforcing filler selected from fiber glass or mineral fiber.

Naturally, the present invention embraces methods of making the present pre-mix, composition composite or laminate.

The invention also provides an insulating structure (and a method of making the same) comprising a composite of the invention pressed or extruded to the desired shape.

Further provided by the invention is any ingredient for any of the above-specified uses (i.e. when intended or particularly suitable for such uses, whether associated with instructions or not).

In the following Examples, which are to be construed as merely illustrative and not limiting upon the scope of the invention, the temperatures are set forth uncorrected in degrees Celsius; unless otherwise indicated, all parts and percentages are by weight.

## EXAMPLE 1

### Preparation of Self-Hardening Composition

The following dry ingredients were mixed together by a rotary mixer:

|  | % by weight |
|---|---|
| Magnesium Calcium Chloride $CaCl_2 : MgCl_2$ | 4 |
| Calcium Metasilicate $CaSiO_3$ | 2 |
| Sodium Fluorosilicate | 1 |
| Kaolin | 1/32 |

To the resulting dry mix was added 93 31/32 % by weight of commercial sodium silicate solution ($40.5°$Baumé, $Na_2O : SiO_2$ ratio 1 : 1.65-3.9.). The mixture was stirred to

9-

a viscosity of 26 contipoise.

EXAMPLE 2

|  | % by weight |
|---|---|
| Expanded Perlite Particles | 63-90 |
| Bonding Compound of Example 1 | 10-37 |

The particles to be bonded were first dry mixed together by mechanically opposed rotating arms and then mixed with the bonding compound in the cold state. The resulting mass was stirred to a paste, which was shaped by application of pressure from 15 - 38 psi into structural products.

EXAMPLE 3

|  | % by weight |
|---|---|
| Fibers (Organic) | 68-84 |
| Diatomite | 5-17 |
| Bonding Compound of Example 1 | 23-35 |

The composite was mixed as in Example 2 and pressed at 17 psi to obtain structural products, which cured at ambient conditions within 1-3 hours to a product having the following characteristics:

Pearl white coloured rigid board with perlite particles shape clearly visible. Capable to be handled and used and when tapped with the finger, gives a resonant solid sound.

EXAMPLE 4

|  | % by weight |
|---|---|
| Expanded Perlite Particles | 25-56 |
| Organic Fibers | 32-45 |
| Bonding Compound of Example 1 | 18-29 |

10

A composite material was obtained as in Example 2.

### EXAMPLE 5

|  | % by weight |
|---|---|
| Expanded Perlite Particles | 60-85 |
| Fiber Glass | 5-12 |
| Bonding Compound of Example 1 | 10-34 |

Composite material obtained as in Example 2 had the following characteristics:

A rigid light weight (17-22 $lb/ft^3$) dry faced core material that had high thermal insulation qualities. Non hygroscopic with free moisture content maximum 0.5%. Appearance pearl white. softening point (900° - 1100°C.) (1600 - 2000°F.)

Fusion point 1280° - 1350°C.
(2300 - 2450°F.)

Products structured from examples 1,2,3,5,6,7, were inert. Some unlaminated core material, (made from example 5,) in accordance with the present invention in the form of dry panels with a specific density of 27 $lb/ft^3$ (432 $kg/m^3$) in 1.0 metre lengths as cold mixed formed and cured panels. These panels were used to form a dry board encasement fire protection cover for a structural steel column and was submitted to a time and temperature test curve of: British Standard 476: part 8 (1972) in the following categories:

Dry panels encasement at 50mm (2 inches) thick with no laminates either side.............Stability: 120 mins.

Re-load:  Satisfied Fire resistance: 120 mins.

Dry panels encasement at 25mm (1 inch) thick with no laminates either side......... Stability:    60 mins Re-load:    Satisfied Fire resistance:    60 mins

Further tests showed that the foregoing panels were completely incombustible and non-toxic when submitted to furnace temperatures of $2,000^{\circ}$F. for extended periods and not subject to loss of bond when direct flame in the same temperature range, was applied to any face of the material for extended periods.

The foregoing examples relate to a rigid dry formed panel, but by the very nature of complete compounds and aggregates, and by the very low psi pressures required to form a desired end product, it is possible to press and mold to any shape that it is capable to be so produced from existing plant and equipment with a modification being made to the feed, and pressure applied in order to retain the known and natural insulation qualities and geodedic strengths that is found in pre-expaned perlite particles of all grade sizes.

EXAMPLE 6

Composites containing up to 55% of fiber glass (see Example 4) had better load bearing characteristics and higher shear strength than those of Example 2.

EXAMPLE 7

Composites of the following compositions are prepared as in Example 2:

| | % by weight |
|---|---|
| Expanded Perlite Particles: Large Grade | 63-74 |
| Kaolin | 4-7 |
| Glass Fibers: One Inch Long | 1-5 |
| Bonding Compound of Example 1 | 10-28 |

The products were structured as core materials having a nominal density of 15 to 28 $lb/ft^3$, and laminated on each face with aluminum foil, air-laid fiber glass sheeting, etc.

## EXAMPLE 8

Bonding material was made as in Example 1 from the following:

| | % by weight |
|---|---|
| Magnesium Chloride | 4 |
| Calcium Metasilicate | 1 |
| Sodium Fluorosilicate | 1 |
| Kaolin | 1/32 |

To this dry mixture was added sodium silicate solution 40-42° Bé., the combination mixed to a viscosity of 26 centipoise.

Bonding material was formulated with expanded fillers and/or fibrous fillers as in Examples 2-7. The behavior of products was similar.

The preceding examples can be repeated with similar success by substituting the generically or specifically described reactants and/or operating conditions of this invention for those used in the preceding examples.

From the foregoing description, one skilled in the art can easily, without departing from the spirit and scope

13

of the invention, make various changes and modifications of the invention to adapt it to various usages and conditions.

0032605

14

<u>CLAIMS</u>;

1. A pre-mix for the formation of a self-hardening composition by the addition to said pre-mix of sodium silicate and water comprising an alkaline earth metal halide, calcium metasilicate, sodium fluorosilicate and an aluminum silicate clay (e.g. Kaolin).

2. A pre-mix as claimed in claim 1, wherein the alkaline earth metal halide is magnesium chloride, calcium chloride or a mixture thereof.

3. A pre-mix as claimed in claim 1 or claim 2 mixed with dry sodium silicate.

4. A self-hardening composition comprising an alkaline earth metal halide, calcium metasilicate, sodium fluorosilicate, sodium silicate, an aluminum silicate clay and water.

5. A composition as claimed in claim 4 containing 3-5% by weight of the alkaline earth metal halide, 0.5-1.5% by weight of calcium metasilicate, 0.5-1.5% by weight of sodium fluorosilicate, 30-40% by weight of sodium silicate, and 0.02-0.04% by weight of the aluminum silicate clay.

6. A composition as claimed in claim 4 or claim 5, wherein the sodium silicate and at least part of the water is provided in the form of a sodium silicate solution.

7. A composition as claimed in any one of claims 4 to 6, wherein the alkaline earth metal halide is magnesium chloride, calcium chloride or a mixture thereof, preferably $CaCl_2.MgCl_2$.

8. A composition as claimed in any one of claims 4 to 7, wherein the aluminum silicate clay is kaolin.

9. A composition as claimed in any one of claims 4 to 8, wherein the amount of sodium silicate is 35-39% by weight.

10. A composition as claimed in any one of claims 4 to 9, wherein the sodium silicate has a $Na_2O:SiO_2$ ratio of 1 : 1.65-3.9.

11. A self-hardening composite material comprising an expanded aggregate material and/or reinforcing fibers, mixed with from 10-35% by weight of the material of the ingredients of a composition as claimed in any one of claims 4 to 10.

12. A laminate comprising a composite material as claimed in claim 11 hardened and firmly adhered to a facing sheet.

16

13. An insulating structure which has been made by pressing or extruding a composite material as claimed in claim 11 to a desired shape and allowing the composite material to harden.

14. Any one of the ingredients as referred to in the definition of a pre-mix in any one of claims 1 to 3, of a composition in any one of claims 4 to 10 or of a composite material in claim 11 for use in the formation of such pre-mix, composition or composite material or for use in the formation of a laminate as claimed in claim 12 or an insulating structure as claimed in claim 13, said ingredient optionally being associated with instructions for such use.

REB/SF/EA128

CLAIMS FOR AUSTRIA

1. A method for the preparation of a pre-mix suitable for the formation of a self-hardening composition by the addition to said pre-mix of sodium silicate and water, which method comprises mixing an alkaline earth metal halide, calcium metasilicate, sodium fluorosilicate and an aluminum silicate clay (e.g. kaolin).

2. A method as claimed in claim 1, wherein the alkaline earth metal halide is magnesium chloride, calcium chloride or a mixture thereof.

3. A method for the preparation of a pre-mix suitable for the formation of a self-hardening composition by the addition said pre-mix of water, which method comprises mixing an alkaline earth metal halide, calcium metasilicate, sodium fluorosilicate, an aluminum silicate clay (e.g. kaolin) and dry sodium silicate.

4. A method for the preparation of a self-hardening composition, which method comprises mixing an alkaline earth metal halide, calcium metasilicate, sodium fluorosilicate, sodium silicate, an aluminum silicate clay and water.

5. A method as claimed in claim 4, wherein the ingredients are mixed in proportions so as to provide in

the resulting self-hardening composition 3-5% by weight of the alkaline earth metal halide, 0.5-1.5% by weight of calcium metasilicate, 0.5-1.5% by weight of sodium fluorosilicate, 30-40% by weight of sodium silicate, and 0.02-0.04% by weight of the aluminum silicate clay.

6. A method as claimed in claim 4 or claim 5, wherein the sodium silicate and at least part of the water in the resulting composition are provided by mixing the other ingredients with a sodium silicate solution.

7. A method as claimed in any one of claims 4 to 6, wherein the alkaline earth metal halide is magnesium chloride, calcium chloride or a mixture thereof, preferably $CaCl_2 \cdot MgCl_2$.

8. A method as claimed in any one of claims 4 to 7, wherein the aluminum silicate clay is kaolin.

9. A method as claimed in any one of claims 4 to 8, wherein the amount of sodium silicate employed is 35-39% by weight of the composition.

10. A method as claimed in any one of claims 4 to 9, wherein the sodium silicate employed has a $Na_2O:SiO_2$ ratio of 1 : 1.65-3.9.

11. A method for preparing a self-hardening composite, which method comprises mixing an expanded aggregate material and/or reinforcing fibers with from 10-35% by weight of the overall composite of the composition ingredients used in a method as claimed in any one of claims 4 to 10.

12. A laminated product comprising a composite layer firmly adhered  to a facing sheet, the composite layer having been formed by hardening a composite prepared by a method as claimed in claim 11.

13. A insulating structure which has been produced by pressing or extruding a composite prepared by a method as claimed in claim 11 to a desired shape and allowing the pressed or extruded composite to harden.

REB/SF/EA128

European Patent Office

**EUROPEAN SEARCH REPORT**

Application number

EP 80 30 0179

| Category | DOCUMENTS CONSIDERED TO BE RELEVANT | | CLASSIFICATION OF THE APPLICATION (Int. Cl. 3) |
|---|---|---|---|
| | Citation of document with indication, where appropriate, of relevant passages | Relevant to claim | |
| | FR - A - 2 378 076 (SOC. DE DIF-FUSION ET DE RECHERCHES TECHNIQUES ET FINANCIERES)<br>* Pages 8,9; claims 1,6,12,13 * | 1,2,4,<br>6,7,9,<br>11,13,<br>14 | C 04 B 19/04<br>B 32 B 13/00 |
| | -- | | |
| | US - A - 3 522 067 (R.A. McARTHUR)<br>* Page 3, table; page 5, lines 20,21 * | 1,4,6,<br>8,11,<br>13,14 | |
| | -- | | |
| | FR - A - 1 449 343 (UNILEVER)<br>* Page 1, left-hand column, line 37 - right-hand column, line 11; page 2, left-hand column, lines 15-21 * | 1,3,4,<br>6,10,<br>11,13,<br>14 | **TECHNICAL FIELDS SEARCHED (Int.Cl. 3)**<br><br>C 04 B 19/00<br>C 09 J 1/00 |
| | -- | | |
| | DE - A - 2 323 659 (KUBOTA)<br>* Page 14, claims 1,2 * | 1,4,6,<br>11-14 | |
| | -- | | |
| | US - A - 3 493 401 (J.B. SCHUTT et al.)<br>* Column 3, lines 24-40; column 4, lines 32-33 * | 1,3-6,<br>8-10,<br>12-14 | |
| | -- | | **CATEGORY OF CITED DOCUMENTS** |
| A | FR - A - 2 381 002 (BAYER) | | X: particularly relevant<br>A: technological background<br>O: non-written disclosure |
| A | FR - A - 1 049 068 (ISOREL) | | P: intermediate document<br>T: theory or principle underlying the invention<br>E: conflicting application<br>D: document cited in the application<br>L: citation for other reasons |
| | ---- | | |
| | | | &: member of the same patent family, corresponding document |

X The present search report has been drawn up for all claims

| Place of search | Date of completion of the search | Examiner |
|---|---|---|
| The Hague | 15-09-1980 | DAELEMAN |

EPO Form 1503.1  06.78